Europäisches Patentamt

European Patent Office

Office européen des brevets

(19)

(11) Veröffentlichungsnummer: **0 044 379**

**A1**

(12) # EUROPÄISCHE PATENTANMELDUNG

(21) Anmeldenummer: **81103476.8**

(22) Anmeldetag: **07.05.81**

(51) Int. Cl.³: **F 24 J 3/02**
**E 04 F 10/08**

(30) Priorität: **19.07.80 DE 8019516 U**

(43) Veröffentlichungstag der Anmeldung:
**27.01.82 Patentblatt 82/4**

(84) Benannte Vertragsstaaten:
**AT CH DE FR IT LI NL**

(71) Anmelder: **Röhm GmbH**
**Kirschenallee**
**D-6100 Darmstadt(DE)**

(72) Erfinder: **Krajec, Otmar**
**An der Fuchsenhütte 38**
**D-6101 Rossdorf(DE)**

(54) Sonnenkollektor.

(57) Der erfindungsgemäße Sonnenkollektor besteht aus einer tragenden Unterkonstruktion aus wenigstens zwei parallel angeordneten Trägern (2) und einder Mehrzahl von gleichartigen, Strahlungsenergie aufnehmenden Kollektorplatten (1), die wenigstens 5 mal so lang wie breit sind, vorzugsweise aus extrudierten Kunststoff-Hohlprofilen bestehen und mit Durchströmungskanälen und Zu- and Abführungsleitungen für ein strömendes Medium sowie vorzugsweise mit weiteren wärmedämmenden Hohlräumen auf beiden Seiten des durchströmten Hohlkammerprofils versehen und in gleichmäßigen Abständen a parallel zueinander in Schräglage unter einem Winkel α zwischen 30 und 60° auf den Trägern angebracht sind.

FIG 1

EP 0 044 379 A1

Sonnenkollektor

Die Neuerung betrifft einen Sonnenkollektor, der aus einer tragenden Unterkonstruktion und einer Mehrzahl von gleichartigen, Strahlungsenergie aufnehmenden Kollektorplatten besteht. Als Beispiel für derartig angeordnete Sonnenkollektoren können Flach- oder Steildächer genannt werden, bei denen der Dachstuhl die Unterkonstruktion bildet und eine Mehrzahl von gleichartigen Kollektorplatten mehr oder weniger flächendeckend nebeneinander in einer Ebene angeordnet sind. Demgegenüber betrifft die Neuerung einen Sonnenkollektor in Pergola-Bauweise, wobei die Kollektorplatten gleichzeitig als Schattenspender für den mit dem Kollektor überdeckten Raum wirken. Der Kollektor eignet sich besonders zur Aufstellung in Gärten und Freizeitanlagen. Das erwärmte Wasser kann z.B. zur Schwimmbadaufheizung verwendet werden.

Auf einer Unterkonstruktion, die im einfachsten Fall aus zwei oder mehr zueinander parallel angeordneten Trägern (2) besteht, ist eine Mehr- zahl von Sonnenenergie aufnehmenden Kollektor- platten (1) angeordnet. Die Kollektorplatten sind in an sich bekannter Weise mit Durchströmungskanälen und Zu- und Abführungsleitungen für
ein strömendes Medium versehen und mit der
Unterkonstruktion fest   verbunden. Sie sind wenigstens 5 mal so lang wie breit und in gleichmäßigen Abständen a parallel zueinander und
quer zu den Trägern in Schräglage mit den
letzteren verbunden, wobei die energieaufnehmenden Flächen der Kollektorplatten in einem
Winkel $\alpha$ zwischen 30 und 60° zur Längsrichtung
der Träger stehen.

Eine zweckmäßige Ausführungsform der Neuerung
ist in  F i g u r  1   im Schnittbild dargestellt. Als Unterkonstruktion dienen Träger
(2), die beispielsweise aus Holzbalken, Doppel-
T-Trägern oder Hohlträgern aus Metall bestehen können. Rohrförmige Träger (2) können
gleichzeitig als Zu- bzw. Abführungsleitung
für das strömende Medium dienen. Die Träger (2)
können untereinander nur durch die Kollektorplatten
verbunden sein. Es können jedoch auch Verbindungsträger (5) angebracht sein, die zweckmäßig über den Trägern (2) unterhalb einer
Kollektorplatte angeordnet sind.

Auf den Trägern (2) sind in gleichmäßigen Abständen a die Kollektorplatten (1) in Schräglage
so angebracht, daß die energieaufnehmenden Flächen
in einem Winkel $\alpha$ zwischen 30 und 60° zur
Längsrichtung der Träger stehen. Die oberen Seitenkanten aller Kollektorplatten liegen in einer Ebene und die unteren Seitenkanten in einer zweiten Ebene, in der im allgemeinen auch die Oberkanten der Träger (2) liegen.

Zur Befestigung der Kollektorplatten auf den Trägern können Stützen (6) verwendet werden, die mit dem Träger verschraubt sind und auf denen die Kollektorplatte mittels eines angeschraubten Bügels (7) festgehalten wird. Die Stützen (6) können auch, wie bei (8) mit gestrichelten Linien angedeutet, untereinander verbunden sein; in diesem Falle greift das umgebogene Ende des Bügels (7) durch ein Loch in dem Verbindungsteil (8) .

Die Träger (2) können in einem Abstand von beispielsweise 1 bis 2 Metern parallel zu- einander liegen. Wenn die Länge der Kollektorplatten (1) ein Mehrfaches dieses Abstandes beträgt, werden 3 oder mehr parallele Träger verwendet. Der neue Sonnenkollektor wird so auf- gestellt, daß die Träger (2) in einer Höhe von mindestens 2 Metern über dem Boden horizontal angeordnet sind und die Strahlunngsenergie-aufnehmenden Flächen der Kollektorplatten nach Süden gerichtet sind. Sie wirken dann für den darunterliegenden Raum als Schattierungselemente. Die freien Zwischenräume zwischen den einzelnen Kollektorplatten dienen dem Lichteinfall und dem freien Luftdurchtritt. Die Festlegung des Anstellwinkels α richtet sich nach dem Sonnenhöchststand. In südlichen Ländern mit sehr hohem Sonnenstand wird man flache Anstellwinkel von etwa 30° wählen, während in gemäßigten Breiten eine steilere. Einstellung, beispielweise 45°, zweckmäßiger ist. Die Kollektorplatten können auch winkelverstellbar angeordnet werden. Ein hoher Wirkungsgrad als Sonnenkollektor und gleichzeitig eine angenehme Schattierungswirkung wird dann erreicht, wenn die Projektionen der Kollektorplatten in die aus den Trägern gebildete Ebene 50 bis 100 % der von den Trägern eingeschlossenen Fläche überdecken, d. h., daß die Breite der Projektionsfläche b das 0,5- bis 1-fache des Abstands a ausmacht. Es ist nicht zweckmäßig, daß b größer als a ist.

Die Länge der Kollektorplatten (1) beträgt wenigstens das 5-fache und vorzugsweise das 10- bis 20-fache ihrer Breite c. Langgestreckte Kollektorplatten dieser Art lassen sich auf einfache Weise als Hohlprofil aus Kunststoff extrudieren. Der Kunststoff muß dunkel eingefärbt und gegenüber dem durchströmenden Medium und der Witterung beständig sein. Geeignet sind z. B. schwarz eingefärbtes Polyäthylen, Polypropylen, PVC oder Polysulfon.

Vorzugsweise haben die Kollektorplatten ebene Außenwände, zwischen denen rechtwinklig angeordnete Verbindungsstege (9) verlaufen, wodurch rechteckige Hohlkammern als Durchströmungskanäle (3) gebildet werden.

Eine zweite Lage von Kanälen (4) kann sich an der Unterseite der Kollektorplatten (1) befinden. Diese Kanäle werden nicht durchströmt und dienen zur Wämeisolierung. Als weitere Wärmeisolierung kann eine lichtdurchlässige Abdeckung (10) in einem geringen Abstand über der Oberseite der Kollektorenplatte angeordnet sein. Gewünschtenfalls können alle genannten Teile durch Extrusion, gegebenenfalls durch Koextrusion aus dunkelfarbigem und lichtdurchlässigem Material, einstückig hergestellt werden. Unter Umständen ist es einfacher und zweckmäßiger, zwei bzw. drei getrennt durch Extrusion erzeugte Hohlkammerprofilplatten übereinander zu schichten, wobei nur die mittlere durchströmt wird. Bei dieser Bauweise wirken sich Temperaturunterschiede und dadurch verursachte Spannungen nicht schädlich aus.

Zum Anschließen der Durchströmungskanäle an die Zu- und Abführungsleitungen eignet sich die im DE-GM 79 27 236 dargestellte Bauweise. Danach werden auf die offenen Enden der Durchströmungskanäle (3) aus zwei Halbschalen gebildete Zuführungsleitungen aufgesetzt, die eine freie Durchtrittsöffnung zu jeder Hohlkammer (5) aufweisen. Diese Zuführungsleitungen werden durch eine aufextrudierte Kunststoffschicht mit der Kollektorplatte verbunden. Bei freistehenden Kollektor-Anlagen kann aus ästhetischen Gründen eine senkrechte Blende an den Außenseiten der Anlage angebracht werden, die die Seitenkanten der Kollektorplatten überdeckt. Als strömendes Medium kommt vor allem Wasser in Betracht.

Sonnenkollektor

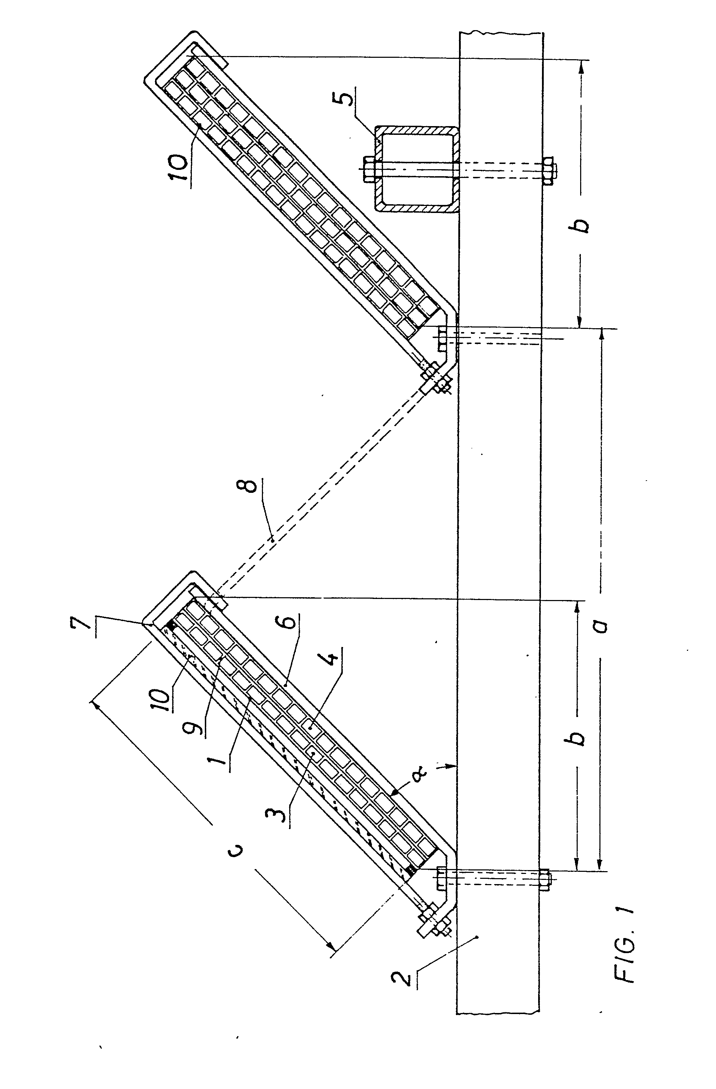

Patentansprüche

1. Sonnenkollektor, bestehend aus einer tragenden Unterkonstruktion und einer Mehrzahl von gleichartigen, Strahlungsenergie aufnehmenden Kollektorplatten, die mit Durchströmungskanälen und Zu- und Abführungsleitungen für ein strömendes Medium versehen und mit der Unterkonstruktion verbunden sind,

dadurch gekennzeichnet,

daß die Unterkonstruktion wenigstens aus zwei oder mehr zueinander parallel angeordneten Trägern (2) besteht, daß die Kollektorplatten (1) wenigstens 5 mal so lang wie breit sind und in gleichmäßigen Abständen a parallel zueinander und quer zu den Trägern verlaufen und mit diesen in Schräglage verbunden sind, wobei die energieaufnehmenden Flächen der Kollektorplatten in einem Winkel α zwischen 30 und 60° zur Längsrichtung der Träger stehen.

2. Sonnenkollektor nach Anspruch 1, dadurch gekennzeichnet, daß die Projektionen der Kollektorplatten in die aus den Trägern gebildete Ebene 50 bis 100 % der von den Trägern eingeschlossenen Fläche überdecken.

3. Sonnenkollektor nach den Ansprüchen 1 und 2, dadurch gekennzeichnet, daß die Kollektorplatten aus extrudierten Kunststoff-Hohlprofilen bestehen, wobei die sich in Längsrichtung der Kollektorplatten erstreckenden Hohlräume (3) als Durchströmungskanäle ausgebildet und mit den Zu- und Abführungsleitungen für das strömende Medium verbunden sind.

4. Sonnenkollektor nach Anspruch 3, dadurch gekennzeichnet, daß sich an der nach unten gerichteten Seite der Kollektorplatte (1) eine weitere Schicht aus Hohlräumen (4) befindet, die nicht als Durchströmungskanäle ausgebildet sind.

5. Sonnenkollektor nach den Ansprüchen 1, 2 und 3, dadurch gekennzeichnet, daß auf der nach oben gerichteten Seite der Kollektorplatte eine weitere durchsichtige Platte in geringem Abstand oder eine weitere durchsichtige Hohlkammerplatte als lichtdurchlässige Wärmedämmung angeordnet ist.

FIG. 1

**Europäisches Patentamt**

# EUROPÄISCHER RECHERCHENBERICHT

| EINSCHLÄGIGE DOKUMENTE | | | KLASSIFIKATION DER ANMELDUNG (Int. Cl.) |
|---|---|---|---|
| Kategorie | Kennzeichnung des Dokuments mit Angabe, soweit erforderlich, der maßgeblichen Teile | betrifft Anspruch | |
| | DE - A1 - 2 603 811 (BBC AG) <br> + Seite 5, Absatz 2,3; Fig. 1-3 + <br> -- | 1,2 | F 24 J 3/02 <br> E 04 F 10/08 |
| | CH - A5 - 611 674 (POSNANSKY, REIMANN,LIEBI,MARBACH) <br> + Seite 2; Fig. 1,3 + <br> -- | 1,2 | |
| | DE - A1 - 2 604 684 (FELLER) <br> + Ansprüche 1,7; Fig. 4 + <br> -- | 1,3,4 | RECHERCHIERTE SACHGEBIETE (Int. Cl.) |
| | DE - A1 - 2 617 324 (THE BRITISH PETROLEUM ) <br> + Seite 9, Absatz 4; Seite 11, Zeile 16; Fig. 4 + <br> -- | 1,3,5 | F 24 J <br> E 04 F <br> E 06 B |
| A | DE - A1 - 2 537 316 (FELIX DÜRST AG) <br> + Seite 4, Zeilen 5-7; Seite 5, Zeilen 11-23 + <br> ---- | 1 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Grunden angefuhrtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 05-10-1981 | SCHMIDT |

EPA form 1503.1  06.78